# EUROPEAN PATENT APPLICATION

(11) **EP 3 751 821 A1**
(43) Date of publication of application: **16.12.2020**
(21) Application number: 19179917.0
(22) Date of filing: 13.06.2019
(51) Int. Cl.: H04L 29/08

(54) **A METHOD FOR MANAGING A SYSTEM WITH A SMOKING SUBSTITUTE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A system and method are provided for managing a smoking substitute device. The system comprises a smoking substitute device having a positional sensing component and/or an orientation sensing component, and an auxiliary device configured to communicate with the smoking substitute device. The positional sensing component and/or the orientation sensing component is configured to be manipulated by a user of the smoking substitute device to provide an input measurement and the smoking substitute device is configured to transmit the input measurement to the auxiliary device. The auxiliary device is configured to provide an output, wherein the auxiliary device is configured for an attribute of the output to be adjusted, based on the input measurement received from the smoking substitute device.

## Description

### TECHNICAL FIELD

The present invention relates to smoking substitute devices. In particular, although not exclusively, it relates to the use of network-enabled smoking substitute devices and their communication with other devices.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present inventor(s) have observed that there is an increasing demand and appreciation, amongst users, for smoking substitute devices having functionality beyond their core functionality.

The present invention has been devised in light of the above considerations.

### Summary of the Invention

At its most general, the present invention provides a system, method, computer implemented method, computer program and devices, which enable a network-enabled smoking substitute device (that is, a smoking substitute device that is capable of wireless communication with other devices) to be managed in a secure and user-controllable manner. In particular, the smoking substitute device can be managed and manipulated by the user, to interact with one or more other devices and to perform functions beyond its core function. This enhances the usefulness of the smoking substitute device to the user and has the potential to reduce the number of separate devices that a user needs to own and use, in order to carry out the activities that the user may wish to carry out as part of his or her day-to-day life.

The user can use his or her smoking substitute device to interact with other devices, referred to herein as "auxiliary devices", such as mobile phones, smart phones, laptop computers, tablet computers, televisions, computer-based gaming devices, or any "smart" appliance. The auxiliary device should be network enabled, in order to establish a wireless communication link between an auxiliary device and the smoking substitute device. The auxiliary device may be configured to run an application or other computer program that can interface with the smoking substitute device, via the wireless communication link between the two devices.

It is known for a smoking substitute device to interface with an application on a mobile device, such as a smartphone, in order to provide output data regarding the operation of the smoking substitute device, which the application can use for managing onward operation of the smoking substitute device. Usually the output data from smoking substitute device is generated by, and is subsequently stored and/or analysed in relation to, the core function of the device, i.e. smoking substitute action. The output data may also relate to, and be used to help with, management and control of the smoking substitute by a mobile device.

The present inventor(s) have recognised that a smoking substitute device need not be limited to providing output data to an auxiliary device or application on an auxiliary device, wherein that output data relates, or is used in relation, only to the smoking substitute device itself. Instead, the inventor(s) have recognised that a smoking substitute device can have much greater functionality and that its outputs can be used as inputs to an auxiliary device, and/or to an application thereon, wherein those inputs have an effect on the outputs and/or the operation of the application, and/or of the auxiliary device. The outputs provided by the smoking substitute device, as inputs to the auxiliary device or application, need not necessarily have arisen from the use of the smoking substitute device for its core function, i.e. from smoking substitute action. Instead, the smoking substitute device can be specifically manipulated to provide inputs for controlling at least one output of an auxiliary device.

The present invention makes use of position and/or orientation sensing components that may already be found in smoking substitute devices, or that could reasonably be incorporated therein, and extends the usefulness of those components, by using them to control the outputs of an application that is being run on, or of another component that is operating as part of, a separate auxiliary device. For example, it can make use of any of: a gyroscope, an accelerometer and a magnetometer, within a smoking substitute device, for controlling the outputs from an auxiliary device.

Therefore, the usefulness of a smoking substitute device, to a user, is improved, by extending its functionality. But this is done in a streamlined and efficient way, which does not place any significant processing demands or physical space demands on the smoking substitute device.

According to a first aspect of the invention, there is provided control system comprising a smoking substitute device having a positional sensing component and/or an orientation sensing component, and an auxiliary device configured to communicate with the smoking substitute device. The positional sensing component and/or the orientation sensing component is manipulatable by a user of the smoking substitute device to cause generation of an input command. The auxiliary device is configured to receive the input command, whereby an output attribute of the auxiliary device is adjustable based on the manipulation of the smoking substitute device.

The smoking substitute device may be network-enabled, in that it comprises a wireless interface which can communicate wirelessly, via a wireless network, with an auxiliary device or a computing component configured to control the auxiliary device. Communication can be, for example, over any suitable short-range network or protocol, such as Wi-Fi, RFID tag, NFC (Near Field Communication), cellular network, or Bluetooth™.

The "auxiliary device", may comprise any of a mobile phone, a smart phone, a laptop computer, a tablet computer, a television, a computer-based gaming device, or a smart (i.e. network enabled) appliance. The auxiliary device may comprise a plurality of components. For example, an auxiliary device may include any combination of a visual display, an audio emitter, a vibrating component and an image capture apparatus. The auxiliary device may comprise, or include, a television having a transceiver component and/or a lightbulb having a transceiver component.

The auxiliary device is preferably network-enabled, so that it can communicate wirelessly, via its wireless interface, with the smoking substitute device or the computing component.

The computing component may be used to reduce a processing burden on the smoking substitute device. For example, the computing component may be configured to interpret, recognise or otherwise determine that a signal from the smoking substitute device corresponds to a manipulation that triggers an input command for the auxiliary device. The smoking substitute device may thus be configured to output the signal, which is indicative of position and/or orientation sensed by the positional sensing component and/or the orientation sensing component, to the computing component, and the computing component may be configured to perform the subsequent processing. The computing component may be any suitable intermediary between the smoking substitute device and the auxiliary device, e.g. a mobile phone that has a bonded communication link with the smoking substitute device. Alternatively, the computing component may be in the auxiliary device itself.

The steps for establishing a wireless communication link between the smoking substitute device and the auxiliary device or the computing component may follow any suitable protocol. For example, if Bluetooth™ is used, the user can activate the Bluetooth™ functionalities of the smoking substitute device and of his or her selected auxiliary device or computing component, with which a wireless communication link is to be established, and the two devices can identify themselves to one another, exchange Bluetooth™ messages, and form a wireless communication link. The exchange should preferably involve suitable security steps, to ensure that the correct two devices form the wireless communication link. For example, the two devices may form a paired wireless communication link, which is secure, and which is an exclusive communication link, between those two individual devices. In order to form a paired wireless communication link, the devices should exchange security data such as encryption keys, passwords or codes. The devices may each be configured to store the encryption key received from the respective other, and to re-use that encryption key each time a connection between the two devices is required. This is known as establishing a bonded wireless communication link.

The steps for establishing a wireless communication link between the smoking substitute device and the auxiliary device or computing component may comprise any suitable combination of user-implemented, computer-implemented and hardware-implemented steps. For example, specific user input should be required in order to identify the auxiliary device, with which the smoking substitute device is to establish a wireless communication link. However, some or all of the steps involved in actually establishing wireless communication links between the smoking substitute device and the auxiliary device(s) or computing component, and the subsequent wireless transmissions between the devices, may happen without any specific user input being required.

When an auxiliary device or computing component has established a wireless communication link with a smoking substitute device, the devices may share data via that link. For example, if the auxiliary device comprises a mobile device on which the user has installed an application for management of the smoking substitute device, the smoking substitute device may submit data regarding some of its hardware components, such as its battery, to the auxiliary device. An application running on the auxiliary device may access some of that data for storage, or possibly for making determinations - for example, for determining remaining battery power from battery output voltage levels. The application, or the auxiliary device, may transmit control signals to the smoking substitute device.

According to the present invention, the data transmitted by the smoking substitute device to the auxiliary device or computing component need not be limited to output data regarding the smoking substitute device. Instead, the smoking substitute device can (in addition to, or instead of, providing such output data) provide at least one "input measurement" for use in managing and controlling operation of the auxiliary device, and/or for managing the outputs of an application being run on the auxiliary device.

The "output" that the auxiliary device is configured to provided may be visual, audible or tactile. The "output attribute" may be any adjustable property of the output of the auxiliary device. For example, the output attribute may be a characteristic or operational parameter of the auxiliary device, as distinct to actual output content. However, in some example, the output attribute may relate to content output by the auxiliary device.

The auxiliary device may comprise a visual display such as a screen, a visual image, a light, an LED or another type of visual display. The output for a visual display may comprise any visual output including still or moving images or lights. For example, when the auxiliary device comprises a visual display, and the output is a visual output, the attribute may comprise the brightness or contrast of the visual output. For example, the attribute may comprise the magnification of the visual output, wherein the smoking substitute device can be used to effectively "zoom in" or "zoom out" on the visual display. For example, the attribute may comprise the location or positioning of the visual output, on the visual display -for example, if the visual output is to be shown alongside other images on the visual display, the smoking substitute device may be configured to select the location or position of that visual output, relative to the other images. This may comprise arranging the visual output and other images vertically and/or horizontally within the two-dimensional plane of the visual display and/or arranging them in a third dimension by layering and/or superimposing the visual output and the other images.

The auxiliary device may comprise an audio emitter such as a loudspeaker, headphones, or another type of speaker, buzzer, alarm or audible alert signal. The output for an audio emitter may comprise any audible output. For example, when the auxiliary device comprises an audio emitter and the output is an audible output, the attribute may comprise the volume of the audible output. For example, the attribute may comprise the balance of sounds, when the audible output comprises a combination of different sounds (for example, in music or when there is a background music track in addition to gaming sounds.) For example, the attribute may comprise the voice type, or instrument type or style in which the audible output is to be emitted. For example, the attribute may comprise the frequency or pitch of the audible output.

The auxiliary device may comprise a tactile output means such as a component that vibrates or otherwise moves, to be felt by a user. The auxiliary device may comprise one or more moving parts such as wheels or robotic moving features.

The auxiliary device may includes an image capture apparatus. The output of the image capture apparatus may include a still image or a moving image. The output attribute may be a property of a digital image obtained by the image capture apparatus. For example, the output attribute may comprise the visual content of the output. For example, the smoking substitute device may be configured to add or superimpose an additional image or other visual item, onto the captured image, and produce a visual output that combines the captured image with the additional image. The input command may be indicative of a position and/or an orientation of the smoking substitute device within a field of view of the image capture apparatus. The input command may be configured to add a graphical feature to the digital image obtained by the image capture apparatus in a position in the digital image corresponding to the smoking substitute device. The relative position of the graphical image to the captured image may be determined in accordance with a position and/or an orientation of the smoking substitute device, within a field of view of the image capture apparatus of the auxiliary device.

A position and/or a relative position and/or an orientation of the smoking substitute device, within a field of view of an image capture apparatus of an auxiliary device, may be used for calibration purposes. The (relative) position or orientation may help determine how a user's inputs (or other motion), as detected by the positional sensing component and/or the orientation sensing component of the smoking substitute device, "translate" or correspond, for controlling adjustment of one or more attributes of an output of the auxiliary device.

The smoking substitute device may be configured so that manipulation, by a user, of the positional sensing component and/or the orientation sensing component to provide an input measurement, comprises a user action being made in relation to the positional sensing component and/or in relation to the orientation sensing component. It may comprise a plurality of user actions made in relation to the positional sensing component and/or in relation to the orientation sensing component. The user action or actions may be directed to the whole of the smoking substitute device, in which the positional sensing component and/or the orientation sensing component is comprised, or the user action or actions may be directed to a specific actuator or mechanism that comprises, or connects to, the positional sensing component and/or the orientation sensing component.

The positional sensing component and/or in the orientation sensing component may comprise any of an accelerometer, a gyroscope, a magnetometer or any component that can sense movement, (relative) position, orientation or direction for a smoking substitute device. In broad terms, and as will be known to the skilled reader, an accelerometer is configured to sense and measure acceleration, so can be used to detect movement of the smoking substitute device. A gyroscope is configured to measure and/or maintain orientation and angular velocity, so can be used to detect rotational movement of the smoking substitute device. A magnetometer is configured to measure magnetism, i.e. the direction, strength, or relative change of a magnetic field at a particular location. A magnetometer can be used as a compass for the smoking substitute device.

Some known smoking substitute devices already comprise a positional sensing component and/or an orientation sensing component. Such components can be used for management and control of the smoking substitute device. For example, an accelerometer may be comprised within a smoking substitute device and may be used, either in isolation or in combination with other components, to detect motion of the smoking substitute device of the type that is typical during a smoking substitute action. Information regarding such detected motion can be recorded, stored and/or analysed for the smoking substitute device in order to detect smoking substitute actions and, for example, to create a record of the number of smoking substitute actions that a user typically performs within a time period.

Therefore, the present invention makes use of components that already are comprised within, and/or which can be readily be comprised within, a smoking substitute device. A positional sensing component and/or an orientation sensing component, of the type required to embody the present invention, can be physically very small and compact. Therefore, their inclusion within a smoking substitute device would not cause significant physical restraint on the device. Nor would the inclusion of a positional sensing component and/or an orientation sensing component, of the type required to embody the present invention, require significant additional processing capability from the smoking substitute device.

Optionally, any changes or additions required in order to implement the present invention may be made to the auxiliary device, as opposed to being made to the smoking substitute device. For example, a software update may be applied to an auxiliary device or to an application running on the auxiliary device, to enable an input measurement received from a smoking substitute device to be used, at the auxiliary device, to adjust an attribute of an output of the auxiliary device.

The manipulation, by a user, of the positional sensing component and/or the orientation sensing component of the smoking substitute device may comprise the user performing a combination, pattern or sequence of actions in relation to the smoking substitute device, to be detected by the positional sensing component and/or in the orientation sensing component. For example, the manipulation by user may comprise rolling, turning or spinning the smoking substitute device, which could be sensed by a gyroscope and/or an accelerometer and/or a magnetometer. The manipulation by user may comprise a tapping movement such as tapping the smoking substitute device against a surface, which could be sensed by an accelerometer and/or a magnetometer.

For example, a gyroscope within a smoking substitute device may be used to position a graphical image or other visual item, that the user wishes to superimpose onto a captured image, by locating the smoking substitute device at a selected position within the field of view of the image capture apparatus of an auxiliary device, when the image is being captured.

A combination of two or more positional and/or orientation sensing components may be comprised within the smoking substitute device and may be operable, either separately or in combination, to help provide an input measurement for adjusting an attribute of an output of the auxiliary device. For example, both a gyroscope and an accelerometer may be employed in order to provide relative positional data for the smoking substitute device within a field of view, or other frame of reference, for the auxiliary device. For example, a gyroscope, an accelerometer and a magnetometer may all be employed, in order to enable the smoking substitute device to act as a rotatable actuator, for controlling an output of the auxiliary device. For example, the smoking substitute device may act as a volume control for an audible output of an auxiliary device, or as a dimmer for a visual output such as a light or a screen.

The smoking substitute device may comprise a control unit configured to generate the input command upon detection of a sequence of manipulations sensed by the positional sensing component and/or the orientation sensing component. The control unit may further transmit the input command to the auxiliary device. In this example, processing of the signals sensed by the positional sensing component and/or the orientation sensing component is performed on the smoking substitute device itself.

However, in another approach, the control system may comprise a computing component configured to determine a position and/or an orientation of the smoking substitute device. The computing component may be configured to generate the input command using the determined position and/or orientation of the smoking substitute device. The computing component can be configured to use a measurement or other indicator, as obtained by the positional sensing component and/or by the orientation sensing component, and to use that measurement or other indicator to make a determination relating to a position and/or an orientation of the smoking substitute device. That determination may then be used to control an adjustment of an attribute of an output of the auxiliary device.

The computing component may be within the auxiliary device, or the computer component may be comprised within an application being run on the auxiliary device or another remote device. For example, the computer component may be provided as a microprocessor or the like. Where the computing component is separate from the smoking substitute device, the processing burden on the smoking substitute device is reduced.

The computing component may be configured to determine a position and/or an orientation of the smoking substitute device relative to the auxiliary device, and generate the input command using the determined relative position and/or orientation. The relative position and/or relative orientation of the smoking substitute device, relative to the auxiliary device, may be obtained by performing a calibration process, for translating or corresponding the manipulation of the smoking substitute device to the adjustment of an attribute of an output of the auxiliary device.

A characteristic of the action or motion that is made in relation to the smoking substitute device, as detected by the positional sensing component and/or the orientation sensing component, can be used, by the computing component, to determine an adjustment of an attribute of an output of the auxiliary device. For example, the characteristic may comprise one or more of: the magnitude, speed, direction, frequency, number and force of the action or motion. For example, a fast movement of the smoking substitute device may result in a larger change to an attribute of an output of the auxiliary device (such as a more significant change in brightness or volume) than a slower movement of the smoking substitute device may result in. For example, repeating an action several times with respect to the smoking substitute device may result in a larger change to an attribute of an output of the auxiliary device (such as a more significant change in brightness or volume) than making that action fewer times (or just once) may result in.

The determination of an adjustment of an attribute of an output of the auxiliary device may make use of an absolute measure and/or a relative measure of one or more characteristics. For example, the characteristic may comprise actual speed, or change in speed (i.e. acceleration) from the beginning to the end of the motion or action.

A user may be able to provide calibration input to the smoking device or to the auxiliary device or to the application being run on the auxiliary device, to help determine how the subsequent user manipulations office smoking substitute device may affect one or more attributes of one or more outputs of the auxiliary device. For example, the user may be able to program the system so that a particular number of actuations, for example a particular number of taps of the smoking substitute device that would be detected by an accelerometer, would correspond to an instruction for an output of the auxiliary device to change in a particular way, for example for the volume of an audible output or for the brightness of a visual output to increase or decrease by a pre-determined amount.

In another aspect of the invention, there is provided a computer-implemented method of controlling an auxiliary device that is in communication with a smoking substitute device, wherein the smoking substitute device comprises a positional sensing component and/or an orientation sensing component, the method comprising: detecting a manipulation of the positional sensing component and/or the orientation sensing component; generating an input command using the detected manipulation; and transmitting the input command to the auxiliary device to cause an adjustment of an output attribute of the auxiliary device.

The method may further comprise establishing a reference position of the smoking substitute device relative to the auxiliary device, wherein the step of detecting a manipulation comprises detecting a position and/or orientation of the smoking substitute device relative to the auxiliary device.

In another aspect of the invention, there is provided a computer-implemented method of controlling an auxiliary device that is in communication with a smoking substitute device, wherein the smoking substitute device comprises a positional sensing component and/or an orientation sensing component, the method comprising: receiving, at the auxiliary device, an input command, wherein the input command is indicative of a manipulation of the positional sensing component and/or the orientation sensing component in the smoking substitute device; and adjusting, using the input command, an output attribute of the auxiliary device.

In a yet further aspect, the invention may provide a computer readable medium having computer readable instructions stored thereon, which, when executed by a processor, are configured to perform a method as set out herein.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4** is a flow diagram of a method of controlling an auxiliary device that is an embodiment of the invention.
**Figure 5** is a flow diagram of a method of controlling an auxiliary device that is another embodiment of the invention.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

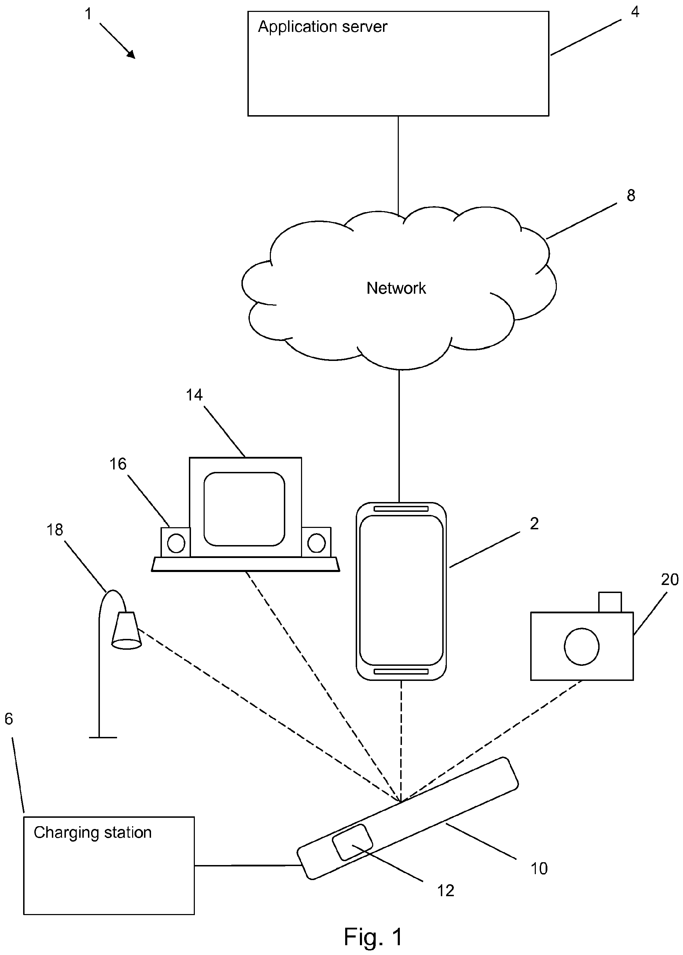

Fig. 1 shows an example system 1 for managing a smoking substitute device 10, and for using a smoking substitute device to control auxiliary device in accordance with embodiments of the invention discussed herein.

The system 1 as shown in Fig. 1 includes a mobile device 2, an application server 4, an optional charging station 6, as well as the smoking substitute device 10. The system 1 further comprise a plurality of auxiliary devices. One of the auxiliary devices is a media playback device comprising a display 14 for showing visual content and one of more speakers 16 for outputting an audio signal. The media playback device may be a television, desktop computer, laptop computer, tablet computer, or the like. The auxiliary devices further comprise a light 18, e.g. a lamp or other lighting for illuminating a room. The auxiliary devices further comprise an image capture apparatus 20, e.g. a digital camera or the like.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

Each of the auxiliary devices may be network-enabled (i.e. "smart") to permit them to communicate wirelessly with the smoking substitute device 10. The wireless communication may be direct, as shown in by dotted lines in Fig. 1, e.g. of a short range wireless network. Alternatively, the devices may be controlled by signals received over the network 8 or from the mobile device 2. In this scenario, communication between the smoking substitute device 10 is relayed via the mobile device 2 and/or the application server 4.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

In embodiments of the invention, the smoking substitute device 10 includes a positional sensing component and/or an orientation sensing component 12. The smoking substitute device 10 may be used to manipulate the positional sensing component and/or an orientation sensing component 12 (e.g. by performing certain movements or actions using the smoking substitute device 10) in a manner that causes an input command to be generated and communicated to one or more of the auxiliary devices. The input command may be generated at the smoking substitute device and communicated (e.g. transmitted wirelessly) directly to the auxiliary device(s). Alternatively, the input command may be generated in a computing component that is separate from the smoking substitute device. The computing component may be the mobile device 2, the application server 4, or even the auxiliary device itself. In this scenario, the computing component may be configured to receive information from the smoking substitute device 10 that is indicative of the manipulation sensed by the positional sensing component and/or an orientation sensing component 12.

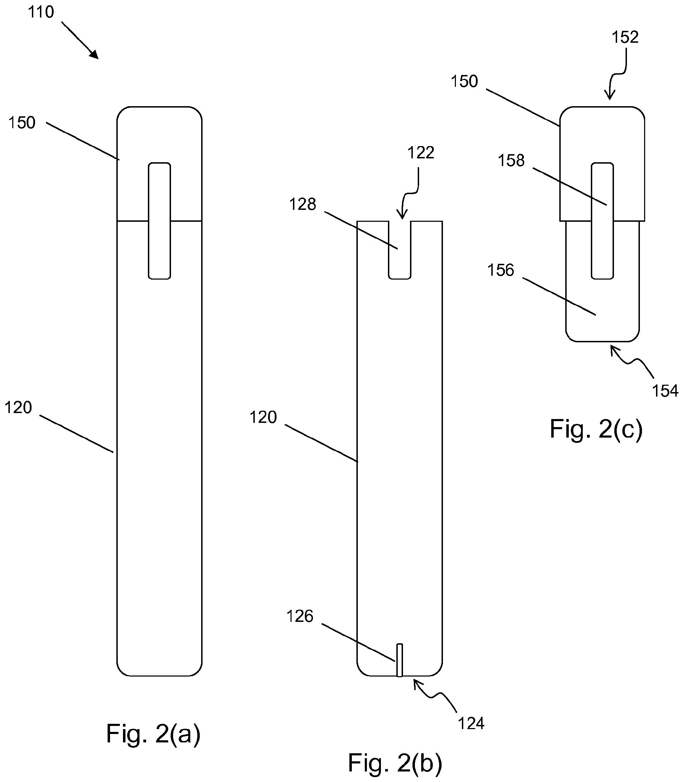

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 150 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

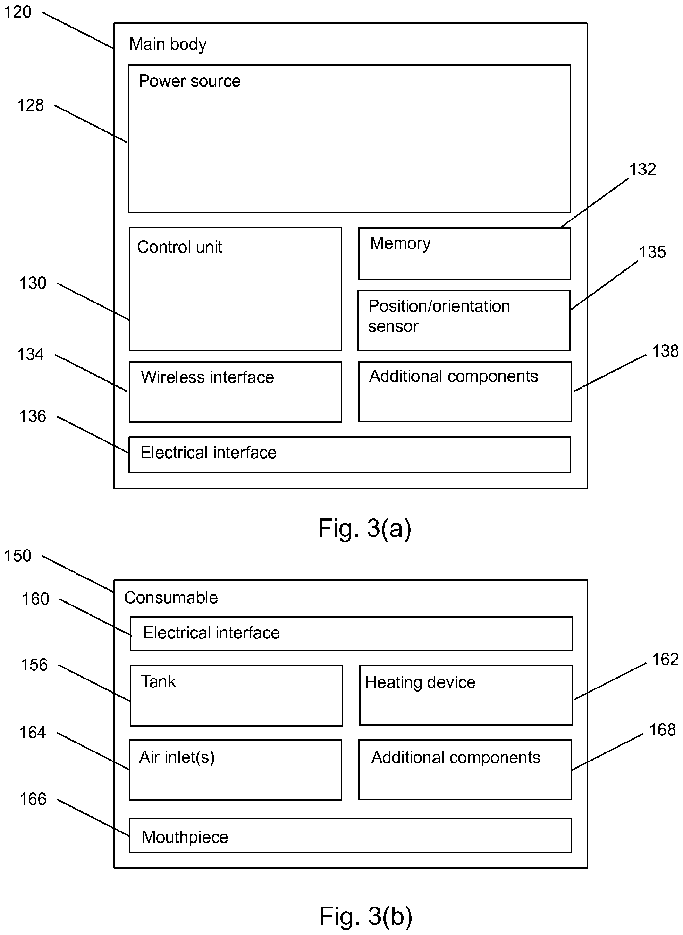

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, a position and/or orientation sensor 135, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The position and/or orientation sensor 135 corresponds to the positional sensing component and/or an orientation sensing component 12 discussed with reference to Fig. 1. The position and/or orientation sensor 135 may comprise a motion sensor and an orientation sensor. The motion sensor may be an accelerometer. The orientation sensor may be a gyroscope or a magnetometer. The position and/or orientation sensor 135 may be configured to output sensing signals that correspond to changes in position or orientation. The output sensing signals may be communicated to the control unit 130. The control unit 130 may determine, based on the received output sensing signals, a manipulation performed by the user. The control unit 130 may be further arranged to recognise a predetermined manipulation or a predetermined sequence of manipulations. For example, the control unit 130 may compare determined manipulations against a library of predetermined manipulations. Upon recognising a predetermined manipulation or a predetermined sequence of manipulations, the control unit 130 may trigger a process of generating an input command for an auxiliary device. As discussed above, the input command may be generated in the smoking substitute device, e.g. by the control unit 130, or may be generated by a separate computing component. In the latter scenario, the control unit 130 may be configured to communicate a signal indicative of the recognised predetermined manipulation or a predetermined sequence of manipulations to the computing component. This communication may be direct, or may be via a mobile device with which the smoking substitute device has a bonded communication link. As discussed in more detail below, the input command is provided to the auxiliary device to adjust an output attribute of the auxiliary device.

The control unit 130 may be configured to perform a calibration procedure using the position and/or orientation sensor 135. The calibration procedure may comprise setting a reference position, in which the smoking substitute device is held by the user in a predetermined position and/or orientation relative to an auxiliary device. After the calibration procedure is performed, the control unit 130 may use the sensing signals from the position and/or orientation sensor 135 to determine a relative position and/or orientation between the smoking substitute device and the auxiliary device. The relative position may be used to trigger generation of an input command, or may be used as part of the input command to adjust an output attribute of the auxiliary device.

The electrical interface 136 of the main body 120 may include one or more electrical contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reader configured to read information associated with the consumable from a machine readable data source included in (e.g. contained in the body of, or attached to) the consumable 150.

The reader may be configured to read information from the machine readable data source wirelessly, e.g. via electromagnetic waves or optically. Thus, for example, the machine readable data source included in the consumable 150 could be an RFID tag (in which case the reader included in the main body 120 may be an RFID reader) or a visual data source such as a barcode (in which case the reader included in the main body may be an optical reader, e.g. a barcode scanner). Various wireless technologies and protocols may be employed to allow the reader to wirelessly read information from a machine readable data source included in or attached to the consumable 150, e.g. NFC, Bluetooth, Wi-Fi, as would be appreciated by a skilled person.

For avoidance of any doubt, the reader (if present) may be configured to read information from the machine readable data source non-wirelessly, e.g. using a direct electrical connection between the main body 120 and consumable 150.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reader configured to read information associated with the consumable from the machine readable data source.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

Embodiments of the present invention relate to the management and use of a network-enabled smoking substitute device such as that discussed above in relation to Fig. 1. In particular, they relate to making use of a smoking substitute device to control an auxiliary device. Herein, the term "auxiliary device" is used to mean a network-enabled device that provides a user-detectable output or performs a function or service for the user. Examples of auxiliary devices include a mobile phone, smart phone, laptop computer, tablet computer, television, gaming device, or any smart appliance, e.g. lighting, media player, digital camera, etc.

The auxiliary devices discussed herein may be devices capable of remote control, i.e. capable of receiving wireless signals that encode input commands that cause the auxiliary device to adjust its operation. In embodiments of the invention, manipulation of the smoking substitute device causes generation of an input command to adjust an output attribute of the auxiliary device. The available input commands may vary depending on the type of auxiliary device. It is envisaged that a link between available input commands and manipulation of the smoking substitute device will be established upon forming a communication link between the smoking substitute device and the auxiliary device (noting that the communication link may be direct or may be via an intermediary, such as a mobile device). The link between available input commands and manipulation of the smoking substitute device may be fixed, i.e. predetermined, or may be adjustable by a user, i.e. a user may be able to selected a type of manipulation that causes generation of a certain input command. This functionality may be provided on an app that runs on the mobile device, for example.

The input command for the auxiliary device may relate to an application running on the auxiliary device (e.g. a gaming app or media player app on a smart phone or other computing device). In other examples, the input command may relate to a control operating system of the auxiliary device (e.g. for volume or brightness control of a television).

An embodiment will now be described in which a Bluetooth™ connection is employed for wireless communication between a smoking substitute device and an auxiliary device. Both devices have Bluetooth™ wireless interfaces. However other types of wireless connection are possible, and it is also possible that the communication may involve one or more intermediate devices, as described above in relation to Fig. 1.

The smoking substitute device in the following example embodiment is of the type described above in relation to Figs. 1 and 3(a), which can form a wireless connection to an auxiliary device capable of remote control, such as a mobile phone, smart phone, tablet, laptop computer, television or gaming device. At the beginning of the method, it is to be taken that the smoking substitute device does not yet have any established wireless communication links to any specific auxiliary devices. For the purpose of the described method, it is to be taken that the user has the requisite authority and/or permissions, to implement this method on his or her chosen devices.

In this example, a communication link is formed in any conventional manner between the smoking substitute device and a network-enabled television, which has both visual and audible outputs. Once the wireless communication link has been established, it can be used in accordance with the present invention to enable the smoking substitute device to be used as a remote controller for the television, in which manipulation of the position and/or orientation of the smoking substitute device is used to generate an input command to adjust an output attribute of the television.

In one example, the position sensor of the smoking substitute device comprises motion sensor, such as an accelerometer configured to detect acceleration of a body or object relative to a free fall direction. Some accelerometers are configured to measure static acceleration forces, like the continuous force of gravity. The accelerometer in this embodiment, comprised within the smoking substitute device, is configured to measure dynamic acceleration forces, and so can sense movement or vibrations. The accelerometer is configured to measure acceleration and its outputs may be used to determine position factors and/or orientation factors such as tilt, tilt angle, and incline, as well as being used to determine actions or events such as rotation, vibration and collision.

The accelerometer may be a piezoelectric accelerometer. However other types of accelerometer may be used in a smoking substitute device, such as a capacitance accelerometer. The accelerometer ,ay comprise a three-axis model, to enable it to sense rotational tilt, as well as movement in a two-dimensional plane.

In this embodiment, the accelerator is configured to detect movement and, for example, collisions, and to provide an output sensing signal in the form of a voltage output to the control unit. The accelerometer can, for example, detect the action of the smoking substitute device being tapped against (i.e. relatively gently colliding with) a surface. When the user taps the device, the accelerometer transmits a corresponding voltage signal to the control unit. The control unit can then control the memory of the smoking substitute device to store (at least temporarily) a measure of the voltage signal, along with an indicator of the time at which it was received.

As mentioned above, the present invention embodies the recognition that smoking substitute device should not have to perform unduly complicated or computationally intensive determinations in order to be useable as an input to an auxiliary device. Therefore according to this embodiment, the control unit is configured to wirelessly transmit a signal to a separate computing component (which may be in the auxiliary device itself or in the mobile device), where that signal is indicative of the voltage signals that have been output by the accelerometer and the times at which they occurred. The control unit does not have to itself interpret the signals, although in some embodiments it may be configured to do so.

The computing component is configured to use the signal from the smoking substitute device to generate an input command to control an output attribute of the auxiliary device (e.g. a volume or brightness of the television). The computing component may use the signal to make a determination about movement (i.e. change in position) of the smoking substitute device. In this embodiment, that determination may comprise determining that the smoking substitute device has performed a certain sequence of movements, e.g. a series of taps or other gestures, which are linked to a certain input command.

The computing component may generate an input command based on the signal from the smoking substitute device, and may transmit it to the auxiliary device (or execute it if the computing component is on the auxiliary device itself) to adjust an output attribute of the auxiliary device. Thus, certain movements (taps or gestures) of the smoking substitute device can be translated into a change in operation of an auxiliary device, e.g. brightness or volume of a television.

In another embodiment, the auxiliary device may be a mobile device that is running a game application. For example, the game application may be a memory game in which the mobile device outputs a sequence or sounds or images. The gameplay may involve the user mimic the sequence as closely as possible by using the smoking substitute device as an input device, e.g. where a tap of the smoking substitute device against a surface corresponds to a sound or image in the sequence. The user's tapping input can be checked against the sequence that it asked the user to mimic. The input command in this example is thus the user's gameplay response. The output attribute that is adjusted may be the next stage of gameplay, which depends on whether or not the user successfully mimics the sequence, or may be a representation of the user response, e.g. a series of markers depicted as a function of time.

In the game example above, the adjusted output attribute may be part of the gameplay. However, preferably, the output attribute referred herein is an operational parameter of the auxiliary device, i.e. a property of how the device functions rather than a property of the content is that is displayed or otherwise output. For example, the operational parameters of a television may include screen brightness and/or audio volume. The television may be configured to display a graduated scale indicating the current level of the relevant operational parameter. The user of the smoking substitute device can use movement of the device, as sensed by the accelerometer, in order to move the markers on one or more of the scales and thereby set operational parameters for the television.

According to another embodiment, the input command provided to the auxiliary device may be based on relative position and orientation of the smoking substitute device and the auxiliary device. In this embodiment, the smoking substitute device may include an orientation sensor (e.g. a gyroscopic sensor) in addition to the motion sensor mentioned above. A gyroscopic sensor can sense orientation, direction, angular motion and rotation. This enables a gyroscopic sensor to, for example, perform gesture recognition functions. Therefore, having a gyroscopic sensor incorporated into the smoking substitute device can provide an output signal indicative of particular movements, such as turning, spinning or rolling of the device. The computing component mentioned above may in turn use these output signals to determine a relative position and orientation of the smoking substitute device relative to the auxiliary device.

To determine relative position, it is desirable to set a reference position, e.g. in which the auxiliary device and smoking substitute device are in a predetermined spatial relationship (e.g. in contact with each other). The reference position may thus create a frame of reference within which subsequent manipulation of the position and/or orientation of the smoking substitute device can be translated to a relative position.

The reference position may be set using a calibration process that is performed before or after the establishment of the wireless link between the smoking substitute device and the auxiliary device. However, performing the calibration after establishment of the wireless link may be preferable so that an application running on the auxiliary device can access signals from the smoking substitute device during the calibration process. According to an embodiment, the calibration process can be run by an application on the computing component that translates the output signals from the accelerometer/gyroscope to the input comment. The calibration process may require the user to place the smoking substitute device in close proximity with the auxiliary device. Probably the application should guide the user as to how close the two devices should be to one another, in order to constitute them being located "together" (i.e. at a common location), during the calibration process. The more accurately that a user can follow such an instruction, the more accurate the calibration process should be. The application should instruct the user to provide an input to the application to inform the application that the two devices are currently "together".

Once the application has obtained position and orientation information from the smoking substitute device when it is located together with the auxiliary device, the application can subsequently use motion and orientation data from the smoking substitute device to ascertain any changes in position or orientation of the smoking substitute device relative to the auxiliary device. The application can thus generate an input command for adjusting an output attribute of the auxiliary device based on that relative change in position or orientation.

In a development of the embodiment discussed above, the auxiliary device itself may also have an accelerometer and/or a gyroscope incorporated therein. For example, the auxiliary device may comprise a smartphone or tablet, many of which are known to incorporate both accelerometer and gyroscopes. The application is then configured to calibrate both devices relative to a reference position or location, wherein the user must place both devices at the reference position or location during the calibration process. Once the calibration has been carried out, the application can then access position and orientation data for both devices from there accelerometer and or gyroscopes and use that data to determine relative positioning and orientation of the devices. It can then make determinations about how to adjust an attribute of an output of the auxiliary device accordingly.

According to embodiments, the orientation sensor of the smoking substitute device may comprise a magnetometer. A magnetometer is a device that measures magnetism, including the direction, strength, or relative change of a magnetic field at a particular location. A magnetometer enables position to be known for the smoking substitute device, relative to magnetic north. Therefore, it can effectively be used as a compass, by the smoking substitute device.

It will be appreciated that the smoking substitute device can comprise any combination of position and or orientation sensors such as accelerometers, gyroscopes and magnetometers. Outputs from a plurality of those sensors can be provided to computing component that generates an input command to control one or more output attributes of an auxiliary device. If the computing component is provided with outputs from a plurality of sensors, as inputs for its control of the outputs of the auxiliary device, it may be able to effect more sensitive and or more accurate control of the outputs and or it may be operable to perform apparently more complicated output control. For example, in an embodiment of the smoking substitute device that comprises a gyroscope and an accelerometer and a magnetometer, The inputs from those components can be used to act as a volume control input for a connected auxiliary device such as a television or other auxiliary device that has audible output. Alternatively or additionally, the combined input from those components can act like a rotatable dimmer switch, for controlling the brightness of lights or of a visual displays such as a screen.

The position and/or orientation sensing components to be comprised within a smoking substitute device in accordance with this invention should be incorporated with the other components of the device in any suitable manner. They should be provided in a physical form that does not take up too much space within the device or render the device overall too bulky or too heavy. For example, the position and orientation sensing component may embody Microelectromechanical systems (MEMS) technology, applies mechanical functions to small structures using dimensions in the micrometre scale.

The outputs of the position and/or orientation sensor components may be stored in a memory of the smoking substitute device, either temporarily or more permanently, and preferably at least until they have been wirelessly transmitted to the auxiliary device with which the smoking substitute device has established a wireless communication link.

An application or other computer program that is operable to access the outputs of the position and/or orientation sensor components within the smoking substitute device and use those output as input for determining control adjustment for an auxiliary device may be of any suitable form and may comprise any suitable processing and or memory means. The application may be configured to store the signals received from the sensor components of the smoking substitute device. Alternatively, it may be configured to either use those signals as applicable, but to subsequently forget or delete them within a relatively short period of time.

The system that comprises the smoking substitute device, the auxiliary device and the computing component may be configured so that the computing component has access to the outputs of the position and orientation sensor components within the smoking substitute device at all times, or at least at frequent regularly spaced intervals. For example, the computing component may be a mobile device that runs an application to receive and process a signal from the smoking substitute device that is indicative of the outputs for the positioning and/or orientation sensors. Alternatively, the system may be configured so that the computing component can only access the output of those positioning and/or orientation sensors in response to a specific user instruction or command. For example, the user may be able to provide an instruction to the application, via an interface of the auxiliary device or mobile device, that he or she wishes to use the smoking substitute device as an input and the computing component may be granted access to the outputs of the sensor components within the smoking substitute device as a result of that instruction.

It may be possible to configure the smoking substitute device to switch between being used for its core function and being used to provide control inputs to the auxiliary device. For example, the application on the auxiliary device may be able to switch off operation of the accelerometer for the purpose of detecting a typical smoking substitute action at times when the user wishes to instead use the accelerometer and its outputs for providing inputs to the auxiliary device, in order to adjust an attribute of an output of that auxiliary device.

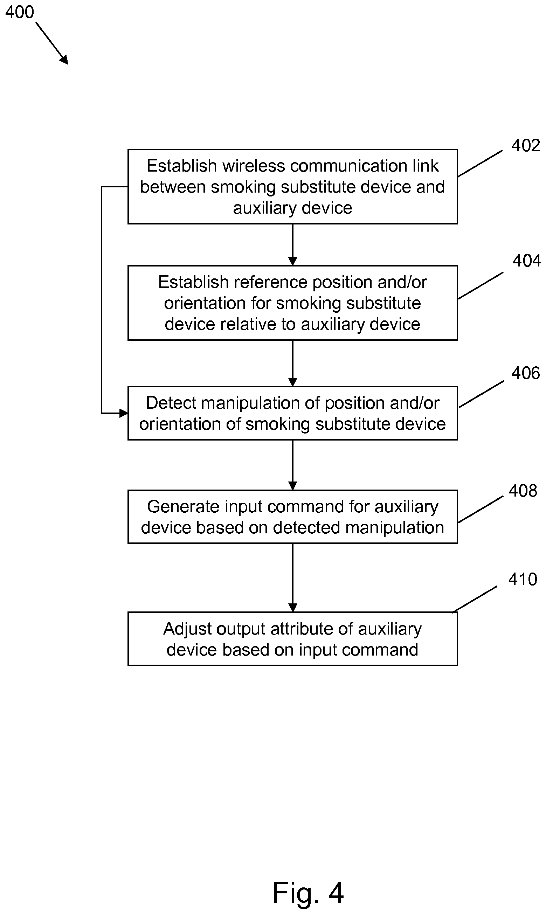

Fig. 4 is a flow diagram depicting a method 400 of using a smoking substitute device to control an output attribute of an auxiliary device. The method begins with a step 402 of establishing a wireless communication link between the smoking substitute device and the auxiliary device. As discussed above, this communication link may be direct or may be via an intermediate computing component, such as the mobile device 2 or application server 4 discussed with reference to Fig. 1.

The method continues with a step 404 of establishing a reference position and/or orientation for the smoking substitute device. The reference position may be establishes as a time stamp at which the user indicates that the smoking substitute device and the auxiliary device are in a predetermined relationship, e.g. held together or in contact. Detected movement of the smoking substitute device after the time stamp can therefore be used to determine a relative position of the smoking substitute device and the auxiliary device (assuming that the auxiliary device remains static). If the auxiliary device is a portable device, the relative position may be determined by using motion/orientation information from both the smoking substitute device and the auxiliary device. Step 404 may be optional, in examples where the position and/or orientation of the smoking substitute device relative to the auxiliary device is not needed.

The method continues with a step 406 of detecting a manipulation of the position and/or orientation of the smoking substitute device. This may comprise outputting signals from the positional sensing component and orientation sensing component indicative of a change in position (i.e. movement) and orientation. The signals may be processed in any manner discussed above to determine the manipulation (or sequence of manipulations).

The method continues with a step 408 of generating an input command for the auxiliary device based on the detected manipulation. As discussed above, this step may be performed by the control unit of the smoking substitute device or, preferably, by a separate computing component, e.g. the mobile device or auxiliary device itself.

The method continues with a step 410 of adjusting an output attribute of the auxiliary device based on the input command. In other words, the input command is executed by the auxiliary device to adjust the output attribute.

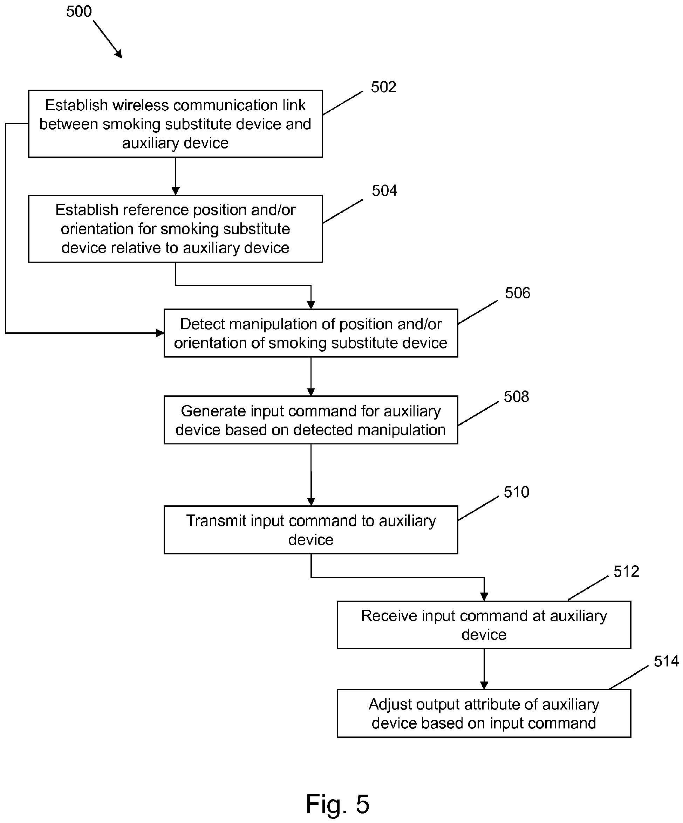

Fig. 5 is a flow diagram depicting another method 500 of using a smoking substitute device to control an output attribute of an auxiliary device. The method begins with a step 502 of establishing, by a smoking substitute device, a wireless communication link between the smoking substitute device and the auxiliary device. As discussed above, this communication link may be direct or may be via an intermediate computing component, such as the mobile device 2 or application server 4 discussed with reference to Fig. 1.

The method continues with an optional step 504 of establishing a reference position and/or orientation for the smoking substitute device. This may be performed in the same manner as discussed with respect to optional step 404

The method continues with a step 506 of detecting a manipulation of the position and/or orientation of the smoking substitute device. This step is performed at a computing component that is separate from the smoking substitute device. The computing component may be a mobile device with which the smoking substitute device has a bonded communication link. The smoking substitute device may transmit a signal indicative of an output of the positional sensing component and orientation sensing component of the smoking substitute device. For example, the signal may indicate a change in position (i.e. movement) and orientation. The signals may be processed by the computing component in any manner discussed above to determine a manipulation (or a sequence of manipulations) of the smoking substitute device.

The method continues with a step 508 of generating, by the computing component, an input command for the auxiliary device based on the detected manipulation.

The method continues with a step 510 of transmitting, by the computing component, the input command to the auxiliary device. The computing component may be in direct wireless communication with the auxiliary device, or may transmit the input command via an intermediary, e.g. via a cloud server or via the smoking substitute device.

The method continues with a step 512 of receiving the input command at the auxiliary device, and continues further with a step 514 of adjusting an output attribute of the auxiliary device based on the input command. In other words, the input command is received and executed by the auxiliary device to adjust the output attribute.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A control system comprising:
a smoking substitute device having a positional sensing component and/or an orientation sensing component; and
an auxiliary device configured to communicate with the smoking substitute device;
wherein the positional sensing component and/or the orientation sensing component is manipulatable by a user of the smoking substitute device to cause generation of an input command;
wherein the auxiliary device is configured to receive the input command, and
wherein an output attribute of the auxiliary device is adjustable based on the input command received from the smoking substitute device.

2. The control system of claim 1, wherein the auxiliary device includes a visual display, and wherein the output attribute comprises a brightness of the visual display.

3. The control system of claim 1 or claim 2, wherein the auxiliary device includes an audio output device for emitting an audio signal, and wherein the output attribute comprises a volume of the audible signal.

4. The control system of any preceding claim, wherein the auxiliary device includes an image capture apparatus, and wherein the output attribute is a property of a digital image obtained by the image capture apparatus.

5. The control system of claim 4, wherein the output attribute is visible content of a digital image obtained by the image capture apparatus.

6. The control system of claim 5, wherein the input command is indicative of a position and/or an orientation of the smoking substitute device within a field of view of the image capture apparatus, and wherein the input command is configured to add a graphical feature to the digital image obtained by the image capture apparatus in a position in the digital image corresponding to the smoking substitute device.

7. The control system of any preceding claim, wherein the smoking substitute device comprises a control unit configured to:
generate the input command upon detection of a sequence of manipulations sensed by the positional sensing component and/or the orientation sensing component; and
transmit the input command to the auxiliary device.

8. The control system of any one of claims 1 to 6 further comprising:
a computing component configured to determine a position and/or an orientation of the smoking substitute device,
wherein the computing component is configured to generate the input command using the determined position and/or orientation of the smoking substitute device.

9. The control system of claim 8, wherein the computing component is configured to:
determine a position and/or an orientation of the smoking substitute device relative to the auxiliary device, and
generate the input command using the determined relative position and/or orientation.

10. The control system of any preceding claim, wherein the smoking substitute device and the auxiliary device are configured to communicate with each another via a short range wireless network.

11. The control system of any preceding claim, wherein the smoking substitute device comprises an accelerometer and a gyroscope configured to determined a position and orientation of the smoking substitute device.

12. A computer-implemented method of controlling an auxiliary device that is in communication with a smoking substitute device, wherein the smoking substitute device comprises a positional sensing component and/or an orientation sensing component, the method comprising:
detecting a manipulation of the positional sensing component and/or the orientation sensing component;
generating an input command using the detected manipulation; and
transmitting the input command to the auxiliary device to cause an adjustment of an output attribute of the auxiliary device.

13. The computer-implemented method of claim 12 further comprising establishing a reference position of the smoking substitute device relative to the auxiliary device, wherein the step of detecting a manipulation comprises detecting a position and/or orientation of the smoking substitute device relative to the auxiliary device.

14. A computer-implemented method of controlling an auxiliary device that is in communication with a smoking substitute device, wherein the smoking substitute device comprises a positional sensing component and/or an orientation sensing component, the method comprising:
receiving, at the auxiliary device, an input command, wherein the input command is indicative of a manipulation of the positional sensing component and/or the orientation sensing component in the smoking substitute device; and
adjusting, using the input command, an output attribute of the auxiliary device.

15. A computer readable medium having computer readable instructions stored thereon, which, when executed by a processor, are configured to perform a method according to any one of claims 12 to 14.
